# EUROPÄISCHE PATENTSCHRIFT

(11) **EP 1 624 213 B1**
(45) Veröffentlichungstag und Bekanntmachung des Hinweises auf die Patenterteilung: **03.10.2007**
(21) Anmeldenummer: 04018774.2
(22) Anmeldetag: 07.08.2004
(51) Int. Cl.: F16D 23/12

(54) **Kupplungshebel für eine Kraftfahrzeugkupplung mit einem Kugelgelenk**
Fork for a motor vehicle clutch having a ball-joint
Fourchette d'un embrayage de véhicule automobile comprenant une articulation sphérique

(43) Veröffentlichungstag der Anmeldung: 08.02.2006
(73) Patentinhaber: ZF FRIEDRICHSHAFEN AG, 88046 Friedrichshafen (DE)
(72) Erfinder: Lindner, Kurt, 97464 Niederwerrn (DE); Müller, Karl, 97490 Poppenhausen (DE); Obergfell, Ralf, 97497 Dingolshausen (DE)

(56) Entgegenhaltungen:
- DE-A- 1 922 913
- DE-A- 19 709 387
- FR-A- 2 791 100
- US-A- 3 591 192
- US-A- 5 785 164

## Beschreibung

Die Erfindung betrifft eine Kupplungshebelanordnung für eine Kraftfahrzeugkupplung mit einem Kugelgelenk gemäß dem Oberbegriff des Patentanspruchs 1.

Kupplungshebelanordnungen zur Übertragung einer Betätigungskraft auf ein gewöhnlich um eine Getriebeeingangswelle eines Schaltgetriebes angeordnetes Ausrücklager, das mit einer Ausrückfeder einer Reibungskupplung eines Fahrzeuges in Wirkverbindung steht, sind allgemein bekannt. Eine derartige, gattungsgemäße Anordnung geht beispielsweise aus der DE 197 09 387 A1 hervor, bei der sich ein als Schwinge ausgebildeter Kupplungshebel schwenkbar mit einem Endbereich über einen an einer Getriebewandung montierten Gelenkkopf abstützt und auf welchen über den anderen Endbereich eine Betätigungskraft zum Betätigen einer Reibungskupplung eingeleitet werden kann.
Der dort dargestellte Kupplungshebel besitzt in dessen Längsmitte eine Ausnehmung, welche einen auf einem Führungsrohr angeordneten Ausrücker umschließt und sich zur Kraftübertragung mit einem Ringflansch eines Ausrücklagers im Anlagekontakt befindet. Zur Ausbildung des Gelenkkopfes weist der Kupplungshebel eine zur Getriebeseite offene Gelenkpfanne auf, in welcher ein Kugelkopf mit einem abstehenden Befestigungsbolzen eingesetzt ist. An dem Kupplungshebel ist radial beiderseits der Gelenkpfanne eine Formfeder unverlierbar angebracht, deren parallele Schenkel in entgegengesetzte Seiten einer Unterschneidung des Kugelkopfes eingreifen und die somit den Gelenkkopf gegen ein unbeabsichtigtes Auseinanderfallen sichert. Die Feder ist so ausgestaltet, dass deren parallele Schenkel beim Aufsetzen der Gelenkpfanne auf den Kugelkopf nach radial außen aufgespreizt werden müssen und diese beim Erreichen des Kugelkopfhalses selbsttätig in die Unterschneidung einschnappen. Da die Formfeder im montierten Zustand des Kupplungshebels zum Zusammenhalten von Kugelkopf und Gelenkpfanne eine beträchtliche Haltekraft aufweisen soll, ergeben sich bei dieser Auslegung gleichzeitig außergewöhnlich hohe Montagekräfte, welche für einen Monteur bei einer Handmontage eine regelmäßig zu erbringende, 100 N übersteigende Kraftanstrengung darstellen.

Eine gattungsgemäße Kupplungshebelanordnung für einen mit einem Gelenkkopf am Fahrzeug gehaltenen Kupplungshebel wird in der DE 1 922 913 A1 offenbart, wobei eine am Kupplungshebel fern von der Kugelpfanne fixierte Blattfeder über eine Manschette auf dem Kugelschaft vorgespannt anliegt. Dazu weist die Blattfeder einen Stützabschnitt mit einer gabelförmiger Endöffnung auf, die auf einer kugeligen Bundfläche des Kugelschaftes aufliegt. Bei der Montage wird der Kupplungshebel mit seiner Haltefeder in Richtung des Kugelschaftes geführt und fädelt sich infolge der gabelförmigen Endöffnung selbsttätig ein.

Von dem genannten Stand der Technik ausgehend, stellt sich die Erfindung die Aufgabe, eine weitere Kupplungshebelanordnung für eine Kraftfahrzeugkupplung mit einem Kugelgelenk zu schaffen, die sich im montierten Zustand durch eine hohe Haltekraft und durch eine dergegenüber wesentlich kleinere Montagekraft zu dessen Montage auszeichnet.

Die Erfindung löst die genannte Aufgabe bei einer gattungsgemäßen Kupplungshebelanordnung mit dem im Kennzeichen des Anspruchs 1 aufgeführten Merkmal.

Dadurch, dass der Kugelkopf von der Haltefeder im Zusammenwirken mit der Deckscheibe in Anlage am Kupplungshebel gehalten wird, kann eine zur Montagekraft unterschiedliche und zwar höhere Haltekraft realisiert werden. Bei der Montage des Kupplungshebels auf dem Kugelkopfbolzen muss nun nicht weiterhin, wie bei Verwendung einer bekannten Formfeder, diese unter Krafteinsatz auseinander gedrückt werden. Vielmehr genügt es, die Deckscheibe lateral aufzuweiten, bis der Kugelkopf diese hintergreifen kann. Auf diese Weise lässt sich die Montagekraft auf einen Wert von deutlich kleiner 100 N, beispielsweise auf etwa 30 N reduzieren. Somit ergibt sich für eine manuelle Montage eine spürbare Arbeitserleichterung. Die Weite der Formfeder muss jedoch nicht zwingend notwendig größer sein, als der Durchmesser des Kugelkopfes, sondern es genügt vielmehr, wenn die Weite der Formfeder so ausgelegt ist, dass bei einem Montagevorgang eine im Vergleich zum Stand der Technik geringere Aufweitung erfolgt und damit geringere Montagekräfte realisiert werden. Daraus ergibt sich, dass die Haltekraft zum Zusammenhalten von Kugelkopfbolzen und Kupplungshebel nicht mehr ausschließlich durch die Formfeder sondern im Zusammenwirken der Formfeder mit der Deckscheibe aufgebracht wird. Die lichte Weite der Formfeder kann deshalb auch etwas kleiner sein, als der Durchmesser des Kugelkopfes.

Vorteilhafte Weiterbildungen und Ausgestaltungen der Erfindung sind in den Unteransprüchen beschrieben.

Gemäß einer vorteilhaften Ausgestaltung ist vorgesehen, die Deckscheibe als Elastomerteil, beispielsweise aus einem Gummiwerkstoff auszuführen. Wird an dieser Deckscheibe eine Öffnung in Form einer kreisförmigen Ausnehmung oder etwa einer zentralen Schlitzanordnung ausgeführt, so lässt sich der Kugelkopf unter geringer Kraftanstrengung durch diese Öffnung hindurch führen und kann sich danach an den Kugelkopfbolzen anlegen.

Mit Vorteil sind an der Deckscheibe Dichtmittel, beispielsweise in Form einer Dichtmanschette oder einer Dichtlippe ausgeführt, welche sich an den Kugelkopfbolzen sowie am Kupplungshebel im Bereich der Kugelpfanne dichtend anlegen und somit das Kugelgelenk vor dem Eintritt von Fremdkörpern sicher schützen. Andererseits wird dadurch ein Aufnahmeraum zur Befüllung mit einem Schmiermittel, beispielsweise eine Fettkammer, bereitgestellt. Diese Fettkammer kann günstigerweise bereits vor der Montage des Kugelkopfbolzens mit Fett befüllt werden und stellt somit für die gesamte Lebensdauer des Kupplungshebels eine ausreichende Schmiermittelreserve dar.

Mit weiterem Vorteil weist die Deckscheibe auf der der Haltefeder zugewandten Seite eine den Außenumfang der Haltefeder zumindest teilweise umschließende Randwulst auf. Auf diese Weise wird ein formschlüssiges Ineinandergreifen von Deckscheibe und Haltefeder realisiert wobei sich die Deckscheibe bei einer entgegen der Montagerichtung eingebrachten Kraft an der Randwulst abstützen kann und somit ein unbeabsichtigtes Lösen der Verbindung von Kugelkopfbolzen und Kupplungshebel sicher verhindert wird.

Mit weiterem Vorteil ist die Haltefeder als Drahtformfeder ausgestaltet, wobei diese zwei Halteabschnitte und zwei Befestigungsabschnitte aufweist, wobei letztere an zwei am Kugelkopfbolzen gegenüberliegend angeordneten Positionen am Kupplungshebel arretiert sind.

Im folgenden wird die Erfindung anhand der beiliegenden Zeichnungen beispielhaft erläutert. Es zeigen:
- Fig. 1: einen in zwei Ansichten dargestellten Kupplungshebel mit einem unter Verwendung einer Deckscheibe daran montierten Kugelkopfbolzen,
- Fig. 2: ein Kugelgelenk mit einer gegenüber Fig. 1 modifizierten Deckscheibe,
- Fig. 3: eine Schnittdarstellung eines Kugelgelenkes mit einer eine Dichtmanschette aufweisenden Deckscheibe.

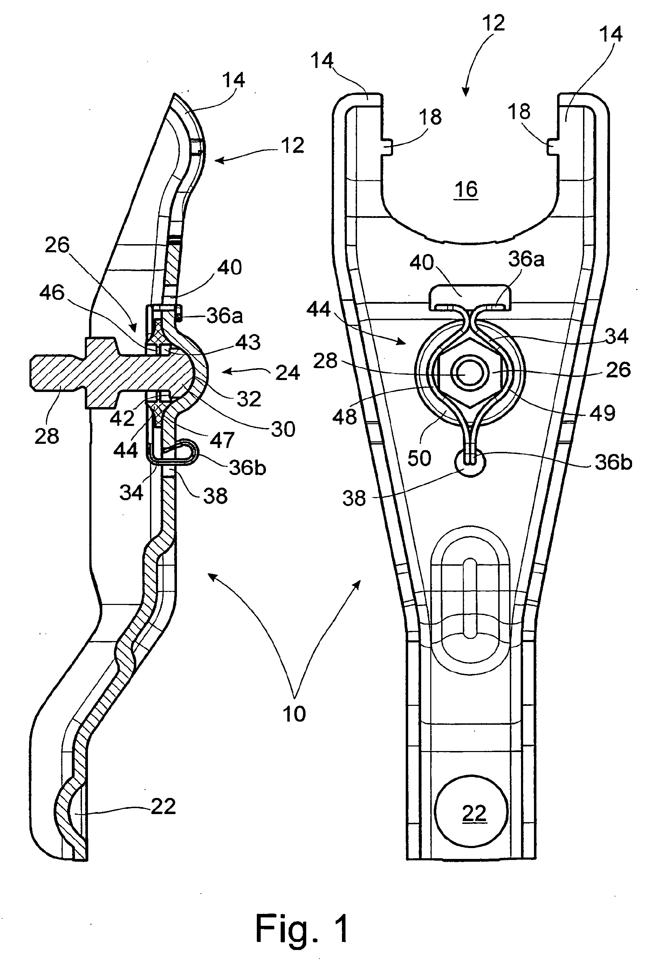

Fig. 1 zeigt einen Kupplungshebel 10, welcher als wannenförmig gestaltetes Kaltumformteil aus Stahl gefertigt ist. Dieser Kupplungshebel 10 weist an einem Endabschitt 12 zwei sich in Längsrichtung erstreckende gabelförmige Fortsätze 14 auf, welche zwischen sich eine Ausnehmung 16 einschließen, die an einem Fahrzeug zur Anordnung um ein nicht dargestelltes Führungsrohr vorgesehen ist. Das Führungsrohr schließt dabei eine Eingangswelle eines nachfolgenden Getriebes konzentrisch ein. Dabei können zwei, in die Ausnehmung 16 gerichtete Nasen 18 an einem Ausrücklager zum Ausrücken einer Reibungskupplung des Fahrzeuges angreifen und das Ausrücklager auf dem Führungsrohr axial verlagern. Der Kupplungshebel 10 weist an dessen, der Ausnehmung 16 gegenüberliegenden Endbereich 20, eine Kugelpfanne 22 zum Eingriff eines Betätigungsorgans, beispielsweise eines Stößels eines Nehmerzylinders auf.

Zur verschwenkbeweglichen Anordnung des Kupplungshebels 10 umfasst dieser ein Kugelgelenk 24 mit einem Kugelkopfbolzen 26, welcher mit einem Kugelschaft 28 in der zur Kupplung gerichteten Wandung des Getriebes eingeschraubt wird. Der Kugelkopfbolzen 26 umfasst an dessen anderen Ende einen Kugelkopf 30, der in eine am Kupplungshebel 10 ausgebildete Kugelpfanne 32 eingreift.

Zur verliersicheren Befestigung des Kugelkopfbolzens 26 am Kupplungshebel 10 ist eine als Drahtformfeder ausgebildete Haltefeder 34 vorgesehen, die in der Draufsicht der Fig. 1 einstückig und spiegelsymmetrisch zur Längsachse des Kupplungshebels 10 ausgebildet ist und zwei Befestigungsabschnitte 36a, 36b aufweist, welche in zwei am Kugelkopfbolzen 26 gegenüberliegend am Kupplungshebel 10 ausgebildete Arretieröffnungen 38, 40 eingreifen und dort arretiert sind.

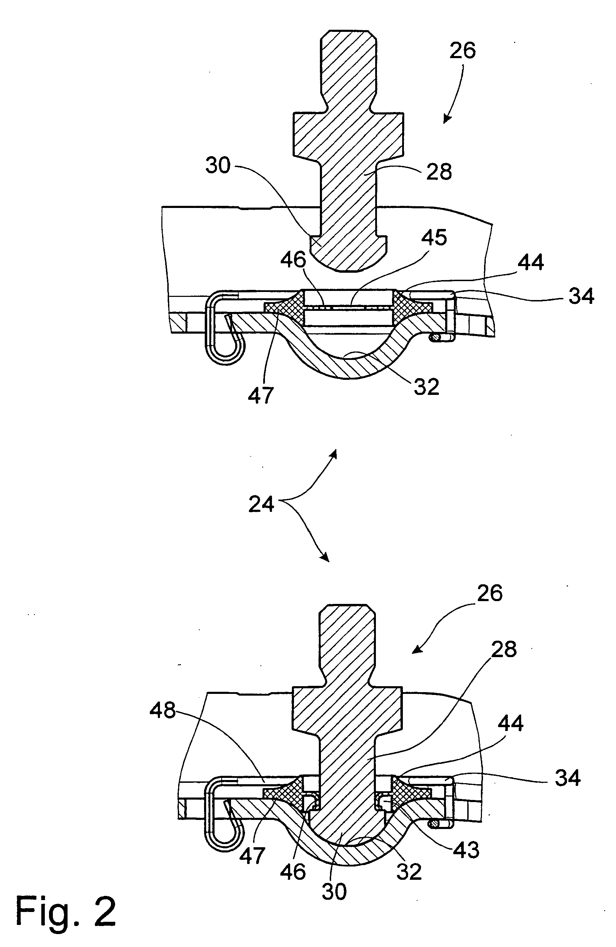

Wie aus der Fig. 1 zu erkennen, wirkt die Haltefeder 34 nicht unmittelbar auf eine am Kugelkopf 30 anschließende Unterschneidung 42, sondern unter Mitwirkung eines axial, bezüglich des Kugelkopfbolzens 26, zwischen der Haltefeder 34 und dem Kupplungshebel 10 angeordneten Deckscheibe 44. Die Deckscheibe 44 ist von kreisförmiger Gestalt und weist, wie dieses in Fig. 2 gezeigt ist, in deren Zentrum eine Öffnung, beispielsweise in Form einer Ausnehmung 45 oder alternativ einer Kreuzschnittanordnung auf, durch welche der Kugelkopf 30 hindurchgeführt werden kann. Dazu ist die Deckscheibe 44 aus einem Elastomer, beispielsweise einem Gummiwerkstoff, gefertigt und kann beim Hindurchführen des Kugelkopfes 30 sich elastisch leicht verformen, d.h. aufweiten. Die in Kontakt mit dem Kugelkopfbolzen 26 befindliche Anlagefläche der Deckscheibe 44, sowie der mit dem Kupplungshebel 10 im Bereich der Kugelpfanne 32 anliegende Teil der Deckscheibe 44 ist als Dichtmittel in Form von Dichtlippen 46, 47 ausgebildet, wobei im montierten Zustand die Dichtlippe 46 in Fig. 2 eine Ringmanschette ausbildet und in Fig. 2 parallel an der Wandung des Kugelschaftes 28 anliegt, während die Dichtlippe 46 in Fig. 1 etwa senkrecht auf die Wandung des des Kugelschaftes 28 zuläuft. Damit ergibt sich ein um das Kugelgelenk 24 abgeschlossener Raum 43, welcher beispielsweise mit einem Schmiermittel zur Schmierung der in Kontakt befindlichen Gleitflächen von Kugelkopf 30 und Kugelpfanne 32 gefüllt werden kann.

Die Haltefeder 34 bildet mit zwei Halteabschnitten 48, 49 einen etwa kreisförmigen Innenbereich aus, dessen lichte Weite bzw. Öffnung größer ist als der Durchmesser des Kugelkopfes 30. Der Auflagebereich der Haltefeder 34 an der Deckscheibe 44 wird nach radial außen durch eine den Randbereich der Deckscheibe 44 bildenden, lediglich an zwei Positionen zum Austritt der Haltefeder 34 unterbrochenen und axial zum Kugelschaft 28 etwa in der Stärke der Drahtformfeder 34 hervorstehenden Randwulst 50 begrenzt. Diese Randwulst 50 ist lediglich in der Draufsicht der Fig. 1 zu erkennen und stellt ein formschlüssig mit den Halteabschnitten 48, 49 der Haltefeder 34 zusammenwirkendes Rückhaltemittel dar, welches sich unter der Wirkung einer Trennkraft an den Halteabschnitten 48, 49 der Drahtformfeder 34 abstützen kann und somit die Deckscheibe 44 in der montierten Position am Kupplungshebel 10 hält. Alternativ zu der Randwulst 50 können die Rückhaltemittel beispielsweise auch form- oder kraftschlüssig mit dem Kupplungshebel im Bereich der Kugelpfanne 32 zusammenwirken. Dazu kann die Deckscheibe 44 bspw. einen oder mehrere durch eine Öffnungdes Kupplungshebels 10 geführte und auf der dem Kugelkopf 30 abgewandten Seite arretierten Befestigungsabschnitte ausbilden.

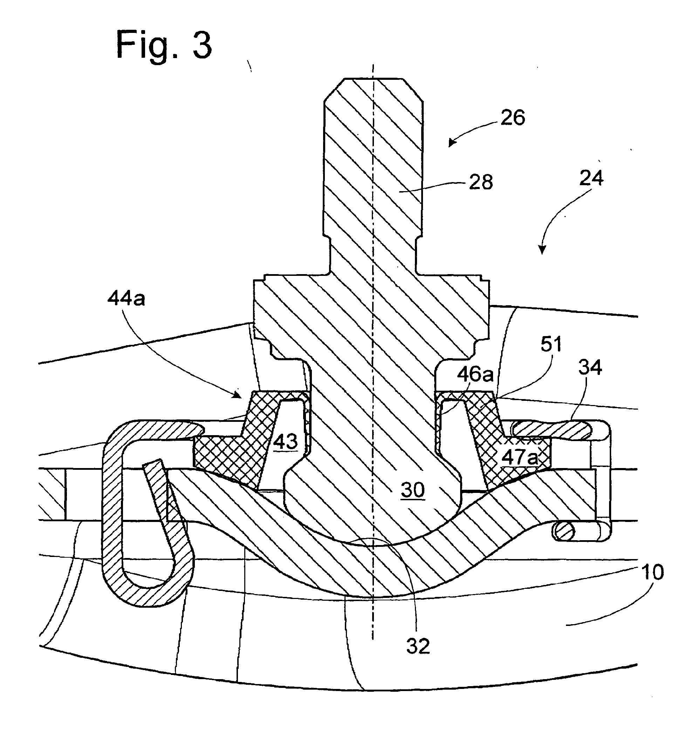

Fig. 3 zeigt ein weiteres Kugelgelenk 24 mit einer gegenüber der Fig. 1 modifizierten Deckscheibe 44a, welche im Anlagebereich zum Kugelkopfbolzen 26 eine am Kugelschaft 28 anliegende Dichtmanschette 46a und im Bereich der Kugelpfanne 32 eine dort anliegende Dichtlippe 47a aufweist, welche über einen kegelstumpfförmigen Abschnitt 51 verbunden sind. Auf diese Weise kann der als Schmiermittelreservoir dienende Raum 43 erheblich vergrößert werden. Die Deckscheibe 44a kann wiederum als Einzelteil vorliegen oder aber vorteilhaft unmittelbar am Kugelkopfbolzen 26 angespritzt sein, womit dadurch eine Gummi-Metallteil erzeugt und die Montage noch weiter vereinfacht werden kann.

Zur Montage des Kugelkopfbolzens 26 an dem Kupplungshebel 10 wird zunächst die Deckscheibe 44, 44a im Bereich der Kugelpfanne 32 aufgelegt und mittels der Drahtformfeder 34 an diesem gesichert. Nach einer fakultativen Fettbefüllung des Aufnahmeraums 43 wird der Kupplungshebel 10 mit dem Kugelkopfbolzen 26 verbunden, indem letzterer durch die sich elastisch weitende Öffnung 45 des Deckelementes 44, 44a hindurchgeführt wird und in der Kugelpfanne 32 zur Anlage kommt, wobei sich die Dichtlippe bzw. die Dichtmanschette 46, 46a an den Kugelschaft 28 anlegt und den Kugelkopf 30 hintergreift. Gleichzeitig liegen bereits die Halteabschnitte 48, 49 der Drahtformfeder 34 radial innerhalb der Randwulst 50 an, so dass ein Lösen der Verbindung von Kugelkopfbolzen 26 und Kupplungshebel 10 bei bestimmungsgemäßen Gebrauch nicht möglich ist.

Bei einem an dem Kugelkopfbolzen 26 angespritzten oder aufvulkanisierten Deckelement 44 kann günstigerweise eine Vormontage des gesamten Kugelgelenkes 24 erfolgen, wobei dann die Verbindung des Kugelschaftes 28 mit dem Getriebegehäuse mit Vorteil als Rast- oder Schnappverbindung vorgesehen werden kann. Alternativ besteht hierbei auch die Möglichkeit, die Haltefeder 34 erst zum Abschluss der Montage eingeklipst wird, d.h. wenn sich Kugelkopf 30 und die Kugelpfanne 32 bereits im Anlagekontakt befinden.

### Bezugszeichenliste

- 10: Kupplungshebel
- 12: Endabschnitt
- 14: gabelförmiger Fortsatz
- 16: Ausnehmung
- 18: Nase
- 20: Endbereich
- 22: Kugelpfanne für Betätigungsorgan
- 24: Kugelgelenk
- 26: Kugelkopfbolzen
- 28: Kugelschaft
- 30: Kugelkopf
- 32: Kugelpfanne
- 34: Haltefeder
- 36 a, 36 b: Befestigungsabschnitt
- 38, 40: Arretieröffnung
- 42: Unterschneidung
- 44: Deckscheibe
- 45: Ausnehmung
- 46, 47: Dichtlippe
- 48, 49: Halteabschnitt
- 50: Randwulst, Rückhaltemittel
- 51: kegelstumpfförmiger Abschnitt

## Patentansprüche

1. Kupplungshebelanordnung für eine Kraftfahrzeugkupplung mit einem Kugelgelenk (24), umfassend
- eine Kugelpfanne (32),
- einen Kugelkopfbolzen (26), der mit einem Kugelschaft (28) zur Montage eines Kupplungshebels (10) an einem ortsfesten Bauteil vorgesehen ist, und
- eine Haltefeder (34) mit mindestens einem Halteabschnitt (48, 49), die einen Kugelkopf (30) des Kugelkopfbolzens (26) in Anlage an der Kugelpfanne (32) hält, wobei der Kugelkopfbolzen (26) eine Deckscheibe (44, 44a) aufweist, durch welche der Kugelkopf (30) hindurchgeführt ist und welche diesen hintergreift,
**dadurch gekennzeichnet,**
**dass** der Kugelkopf (30) von der Haltefeder (34) im Zusammenwirken mit der Deckscheibe (44, 44a) in Anlage am Kupplungshebel (10) gehalten wird.

2. Kupplungshebelanordnung nach Anspruch 1,
**dadurch gekennzeichnet,**
**dass** die Deckscheibe (44, 44a) als Elastomerteil ausgebildet ist.

3. Kupplungshebelanordnung nach Anspruch 1 oder Anspruch 2,
**dadurch gekennzeichnet,**
**dass** die Deckscheibe (44, 44a) Dichtmittel (46, 46a; 47, 47a) zur Anlage am Kugelkopfbolzen (26) sowie am Kupplungshebel (10) aufweist.

4. Kupplungshebelanordnung nach einem der vorhergehenden Ansprüche,
**dadurch gekennzeichnet,**
**dass** die Deckscheibe (44, 44a) Haltemittel (50) aufweist, welche mit der Haltefeder (34) oder dem Kupplungshebel (10) zusammenwirken und einer unbeabsichtigten Demontage des Kugelgelenkes (24) entgegenwirken.

5. Kupplungshebelanordnung nach Anspruch 4,
**dadurch gekennzeichnet,**
**dass** die Deckscheibe (44, 44a) auf der der Haltefeder (34) zugewandten Seite eine den Außenumfang der Haltefeder (34) zumindest teilweise umschließende Randwulst (50) als Haltemittel (50) aufweist.

6. Kupplungshebelanordnung nach einem der vorhergehenden Ansprüche,
**dadurch gekennzeichnet,**
**dass** die Haltefeder (34) als Drahtformfeder mit zwei Halteabschnitten (48, 49) ausgebildet ist.

7. Kupplungshebelanordnung nach einem der vorhergehenden Ansprüche,
**dadurch gekennzeichnet,**
**dass** die Haltefeder (34) zwei Befestigungsabschnitte (36a, 36b) aufweist, welche an zwei am Kugelkopfbolzen (26) gegenüberliegenden Arretieröffnungen (38, 40) am Kupplungshebel (10) arretiert sind.

## Claims

1. Clutch lever arrangement for a motor vehicle clutch having a ball and socket joint (24), comprising
- a ball socket (32),
- a ball head pin (26), which is provided with a ball shank (28) for fitting a clutch lever (10) to a fixed component, and
- a retaining spring (34) having at least one retaining section (48, 49), which holds a ball head (30) of the ball head pin (26) in bearing contact with the ball socket (32), the ball head pin (26) having a side plate (44, 44a), through which the ball head (30) is inserted and which grips behind the latter,
**characterized in that** the ball head (30) is held in bearing contact with the clutch lever (10) by the retaining spring (34) interacting with the side plate (44, 44a).

2. Clutch lever arrangement according to Claim 1, **characterized in that** the side plate (44, 44a) is embodied as an elastomer part.

3. Clutch lever arrangement according to Claim 1 or Claim 2, **characterized in that** the side plate (44, 44a) has sealing means (46, 46a; 47, 47a) for bearing against the ball head pin (26) and the clutch lever (10).

4. Clutch lever arrangement according to any one of the preceding Claims, **characterized in that** the side plate (44, 44a) has retaining means (50), which interact with the retaining spring (34) or the clutch lever (10) and counteract an accidental dismantling of the ball and socket joint (24).

5. Clutch lever arrangement according to Claim 4, **characterized in that** on the side facing the retaining spring (34) the side plate (44, 44a) has retaining means (50) in the form of a peripheral collar (50) at least partially enclosing the outer circumference of the retaining spring (34).

6. Clutch lever arrangement according to any one of the preceding Claims, **characterized in that** the retaining spring (34) is embodied as a wire spring having two retaining sections (48, 49).

7. Clutch lever arrangement according to any one of the preceding Claims, **characterized in that** the retaining spring (34) has two fixing sections (36a, 36b), which are locked to the clutch lever (10) at two opposing detent apertures (38, 40) on the ball head pin (26).

## Revendications

1. Ensemble de levier de débrayage pour un embrayage de véhicule automobile, avec une articulation à rotule (24) comprenant
- un coussinet sphérique (32),
- une rotule (26), qui est dotée d'une queue de rotule (28) pour le montage d'un levier de débrayage (10) sur une pièce fixe, et
- un ressort de maintien (34) avec au moins une partie de maintien (48, 49) qui maintient une tête de rotule (30) de la rotule (26) en application contre le coussinet sphérique (32), sachant que la rotule (26) présente un disque de recouvrement (44, 44a) à travers lequel passe la tête de rotule (30) et qui s'engage derrière celle-ci,
**caractérisé en ce que** la tête de rotule (30) est maintenue en application contre le levier de débrayage (10) par le ressort de maintien (34) en coopération avec le disque de recouvrement (44, 44a).

2. Ensemble de levier de débrayage selon la revendication 1, **caractérisé en ce que** le disque de recouvrement (44, 44a) est réalisé sous forme de pièce en élastomère.

3. Ensemble de levier de débrayage selon la revendication 1 ou 2, **caractérisé en ce que** le disque de recouvrement (44, 44a) présente des moyens d'étanchéité (46, 46a; 47, 47a) pour l'application contre la rotule (26) et contre le levier de débrayage (10).

4. Ensemble de levier de débrayage selon l'une quelconque des revendications précédentes, **caractérisé en ce que** le disque de recouvrement (44, 44a) présente des moyens de maintien (50) qui coopèrent avec le ressort de maintien (34) ou le levier de débrayage (10) et s'opposent à un démontage inopiné de l'articulation à rotule (24).

5. Ensemble de levier de débrayage selon la revendication 4, **caractérisé en ce que** le disque de recouvrement (44, 44a) présente comme moyen de maintien (50), sur le côté tourné vers le ressort de maintien (34), un bourrelet marginal (50) entourant au moins partiellement la circonférence extérieure du ressort de maintien (34).

6. Ensemble de levier de débrayage selon l'une quelconque des revendications précédentes, **caractérisé en ce que** le ressort de maintien (34) est réalisé sous forme de ressort façonné en fil métallique avec deux parties de maintien (48, 49).

7. Ensemble de levier de débrayage selon l'une quelconque des revendications précédentes, **caractérisé en ce que** le ressort de maintien (34) présente deux parties de fixation (36a, 36b) qui sont bloquées sur le levier de débrayage (10) dans deux ouvertures de blocage (38, 40) faisant face à la rotule (26).
